# EUROPÄISCHE PATENTSCHRIFT

(11) **EP 0 737 423 B1**
(45) Veröffentlichungstag und Bekanntmachung des Hinweises auf die Patenterteilung: **06.12.2000**
(21) Anmeldenummer: 96105771.8
(22) Anmeldetag: 12.04.1996
(51) Int. Cl.: A21B 1/24, F24C 15/32

(54) **Verfahren und Einrichtung zur automatischen Behandlung von Kühlgut, Gargut und Backwaren**
Method and apparatus for the automated processing of food and bakery products
Méthode et appareil de traitement automatique des aliments et produits de boulangerie

(30) Priorität: 15.04.1995 DE 19514178; 11.04.1996 DE 19614309
(43) Veröffentlichungstag der Anmeldung: 16.10.1996
(73) Patentinhaber: HFB Küchengeräte GmbH, 04179 Leipzig (DE)
(72) Erfinder: HFB Küchengeräte GmbH, 04179 Leipzig (DE)
(74) Vertreter: Voigt, Wolf-Rüdiger

(56) Entgegenhaltungen:
- EP-A- 0 138 348
- DE-A- 3 843 287
- FR-A- 2 474 852
- US-A- 3 982 584

## Beschreibung

Die Erfindung betrifft ein Verfahren zur automatischen Behandlung von Kühlgut, Gargut und Backwaren, wobei bestimmte Behandlungsschritte erforderlichenfalls parallel ablaufen können. Den sehr hohen Anforderungen an die Hygiene wird dabei entsprochen.

Mit der Erfindung wird eine Einrichtung beschrieben, die in Haushalten, Gaststättenküchen oder in Großküchen zur Anwendung kommen kann. Es wird möglich, verschiedene Verfahren der Speisezubereitung wie das Kochen, Braten, Backen gleichzeitig durchzuführen. Die Erfindung stellt keine Kombination bestimmter Baugruppen dar, um ein neues Gerät vorzustellen, sondern einzelne bzw. die Summe der Vorschläge führen zu verbesserten bzw. zu neuen Effekten.
Zur automatischen Behandlung von Gargut gibt es recht anspruchsvolle technische Lösungen, die mehr oder weniger beschrieben sind und teilweise bisher zur Anwendung kommen. Man muß jedoch feststellen, unterzieht man vorhandene Gargeräte einer eingehenden Betrachtung, daß diese Geräte zu sehr eine schnelle Garung bewirken, aber zu wenig auf die Besonderheiten der Garung eingehen.

Auch bei der Kühllagerung und der Reerhitzung in einem umbauten Raum ohne die sonst übliche Umlagerung wird gemäß Stand der Technik auf die arteigene Behandlung von Gargut nicht eingegangen.

Eine maßgebliche Bereicherung des Standes der Technik ergibt sich aus dem DD-WP 262531. Damit wird es möglich, die Luftfeuchte im Garraum durch ein Wasserbad zu erhöhen. Es wird bei Erfordernis das Gargut nicht nur mit Wasser, sondern mit der beim Garen abtropfenden Flüssigkeit besprüht (Glasieren). Entsprechende Einbauten verhindern ein Vermischen der vom Gargut abtropfenden Flüssigkeit mit einem Wasserbad, das heißt einer am Boden des Gargerätes angeordneten Wasserschale. Damit ist während des Garprozesses eine hohe Luftfeuchtigkeit garantiert.
Unter Beachtung dieser Ausführungen läßt sich feststellen, daß einzelne Verfahrensschritte bzw. die Geräte bei der Speiseaufbereitung Teilverbesserungen bewirken.

Bei dem hier nachfolgend beschriebenen Verfahren und der Einrichtung steht als Aufgabe im Hinblick auf das Gargut, mit einer durchgängigen Behandlung die arteigenen Geschmacksstoffe (weiterhin auch Vitamine, Mineralstoffe, Spurenelemente) zu erhalten und diese genußfähig aufzubereiten.
Die Erfindung soll sich aber darüberhinaus auch auf das Kühlen und Backen beziehen, denn eine Anlage, die zum Kühlen, Garen und Backen verwendet werden kann und bei der die speziellen Anforderungen an die Zubereitung Berücksichtigung finden, ist bisher nicht bekannt geworden.

Aufgabengemäß soll eine universelle Nutzung der neuen Einrichtung möglich sein, was zur Einsparung von mehreren bekannten Geräten bei Neuanschaffung oder Aussonderung verschiedener Geräte bei Ersatz durch Neuanschaffung führt.
Als Aufgabe der neuen Erfindung in Bezug auf das Verfahren und die Einrichtung sind noch zu nennen:
- Einsparung von Wasser und Energie
- Verbesserung der hygienischen Parameter und Einhaltung der vorgeschriebenen Hygienerichtlinien
- Arbeitszeiteinsparung, die nicht nur in Unternehmen, die als Großküchen arbeiten, wichtig ist, sondern auch willkommenermaßen die Arbeit im Haushalt rationalisiert.

Zuerst soll aufgabengemäß die Einrichtung und das Verfahren im Hinblick auf das Garen und Kühlen, danach im Hinblick auf das Kühlen, Garen und Backen beschrieben werden.

Im Kühlraum/Garraum im Bodenbereich wird in bekannter Weise gemäß DD-WP 262531 eine Wasserschale, d.h. ein flacher, oben offener Wasserbehälter vorgesehen, welcher zum Zwecke einer möglichst großen Verdunstungsoberfläche im wesentlichen im Grundriß mit der Bodenfläche des Garraumes übereinstimmt. Unter der Wasserschale angeordnete Heizspiralen ermöglichen im Bedarfsfalle bei bestimmten Garverfahren die Erzeugung einer zusätzlichen Luftfeuchte. Die Wasserschale besitzt an ihrem tiefsten Punkt einen Anschluß zum Abfließen des Wassers. Längs zur Oberfläche der Wasserschale ist mittig eine Fondschale angeordnet (Oberfläche ca. 1/4 der Oberfläche der Wasserschale). An den Seiten des Garraumes werden Leitbleche mit einer Neigung zur Fondschale so eingebaut, daß sie die Oberfläche der Wasserschale überdecken.
Von der Fondschale aus wird eine Einsprühleitung bis an die Decke des Garraumes gezogen, wobei die Förderung durch eine außen gelagerte Pumpe erfolgt. Ein elektronischer Kerntemperaturmesser, der sich im Kern des Fleisches befindet, zeigt an, wann das Gargut fertig gegart ist.
Das Verfahren zur Behandlung des Gargutes stellt sich wie folgt dar:
Ein für die Behandlung vorbereiteter Braten wird im Kühl-/Garraum plaziert, und in die Fondschale werden die entsprechenden Gewürze und Wasser gegeben. Nach einem vorgegebenen Programmablauf erfolgt zuerst die Kühlung oder es wird, je nach Bedarf, gleich mit dem Erwärmen begonnen. In jedem Falle wird anfangs in die Wasserschale Wasser gepumpt, so daß Feuchtigkeit für die Verdunstung bereit steht, die auch im Falle einer anfänglichen Kühlung bzw. bei der Erwärmung ein Austrocknen des Bratenfonds verhindert.
Soll das Gerät auf Garen geschaltet werden, wird die Baugruppe zur Kühlung außer Betrieb gesetzt, ein Ventil sperrt die Zuführ von Kaltluft in den Kühl/Garraum und über einen gegenüberliegenden Eintrittskanal erfolgt die Zufuhr eines Wärmestromes. Beim Erreichen einer vorgewählten Gartemperatur beginnt nach einem vorgegebenen Rhythmus das Übergießen des Bratens (Glasieren) mit der Flüssigkeit aus der Fondschale (Abstand 1-10 min.). Durch abtropfendes Fett bzw. Fleischsaft wird die Fondflüssigkeit geschmacklich verbessert und steht nach dem Erhitzen als Soße bzw. als Grundlage für eine Soßenherstellung zur Verfügung. Der Kerntemperaturmesser schaltet den Garvorgang ab. Das heiße Wasser wird aus der Wasserschale abgelassen und diese wird mehrmals mit kaltem Wasser beaufschlagt. Neben der Reinigung wird damit ein ganz wichtiger Effekt erzeugt, denn es wird ein schnelles Absinken der Temperatur im Garraum erreicht. Es ist bekannt, daß insbesondere nach dem Garungsprozeß sich im Fleisch bei Temperaturen von 30-40°C verstärkt Bakterien bilden und es dadurch zu schweren Erkrankungen gekommen ist und immer wieder kommen kann. Mit der Verwendung von kalten Wasser für das Spülen der Wasserschale wird dieser Temperaturbereich schnell erreicht und bei dann einsetzender Kühlung schnell unterschritten. Wann auch immer das Fleisch und der Fond benötigt wird, kann die Entnahme mit der geforderten Kühltemperatur erfolgen. Die weiteren Darlegungen zum Verfahren und der Einrichtung zur automatischen Behandlung von Kühlgut, Gargut und Backwaren knüpfen teilweise an die bisherigen Darlegungen an, gehen aber verfahrenstechnisch und auch hinsichtlich der apparativen Lösung über diese hinaus.

Der Grundkörper besteht - erst einmal allgemein gesagt - aus einem Kühl-Garraum, einem Heizraum, einem Kühlgeräteraum, einem Motorraum sowie aus zwei Lagerbereichen als sinnvolle Ergänzungen, d.h. einmal für Geräte und andererseits für notwendigen Stauraum für Bedarfsteile, die bei den Kühl-, Gar-, oder Backprozessen zur Anwendung kommen können, wie sich aus den weiteren Darlegungen noch ergibt.
Der Kühl-Garraum ist ein dem Stande der Technik entsprechend isolierter Raum, in dem Kühlprozesse mit Hilfe eines Kühlaggregates oder Gar- und Backprozesse mit Hilfe einer elektrischen Heizung stattfinden können. In diesem Kühl-Garraum befinden sich Gitter für die Ablage von Speisen in mehreren Ebenen übereinander.
Die notwendige Wärme wird, soweit gegart oder gebacken werden soll, von dem Heizraum mit Hilfe eines Gebläses durch Schachtöffnungen in den Kühl-Garraum transportiert. Damit umgibt die Wärmeströmung das auf den Gittern befindliche Gargut direkt und verläßt gegenüber der Eintrittsseite über Schachtöffnungen den Garraum und strömt zurück zum Heizraum. Vorher erfolgt noch eine Luftreinigung über ein Filtersystem. Im Gegensatz zu bekannten Geräten werden mit der Wärmerückführung und Restwärmenutzung ca. 50-60% Energie gespart.

Da sich zwischen jedem Gitter ein Kanal mit Ein- und Ausgang befindet, kann durch Isolierschichten der Kühl-Garraum horizontal in einzelne Kammern geteilt werden. Die Isolierschichten können Einschübe darstellen, wobei Schamotte oder andere geeignete wärmeisolierende Stoffe mit Blech umkleidet werden. Damit wird bei der Nutzung eines abgeteilten Garraumes, welcher beispielsweise für das Backen verwendet wird, wieder ein beträchtlicher Teil Energie gespart im Gegensatz zur gesamten Nutzung des verfügbaren Raumes für das Backen. Erfahrungsgemäß benötigen die im Haushalt zu garenden oder zu backenden Lebensmittel nur ein Teil des insgesamt verfügbaren Platzes.

Bedingt durch die Verwendung von Ein- und Austrittskanälen und der damit möglichen Wärmebewegung im Garraum kann durch Einstellen einer höheren Strömungsgeschwindigkeit eine schnellere Garung erfolgen.

Auf dem Bodenblech des Kühl-Garraumes sind zusätzlich voneinander getrennte Heizspiralen angeordnet, die z.B. zum Kochen von Kartoffeln zugeschaltet werden können. Da nunmehr das Kochen von Kartoffeln in einem geschlossenen Raum erfolgt, wird die Umgebungswärme beim Kochen zu 90% ausgenutzt und geht nicht wie beim Kartoffelkochen auf dem Herd im Raum verloren. Zur gleichen Zeit kann in einer zweiten Kammer der Bratvorgang erfolgen (z.B. Rinder- oder Schweineschmorbraten), und in einer dritten Kammer kann zur gleichen Zeit z.B. ein Kuchen gebacken werden. Möglich ist dieses, da jede Kammer für sich abgeschottet und die Heißluft von keinen Gerüchen behaftet ist, da ein integriertes Filtersystem dieses verhindert.

Beim Verwenden einer Fondschale, welche durch die schon erwähnten Heizspiralen am Boden des Kühl-Garraumes beheizt wird, kann im gesamten Kühl-Garraum oder nur in der unteren Kammer gedämpft werden.

Die Verwendung einer Fondschale kann bei der Garungsart "Kombigaren" so genutzt werden, daß nach dem Anbraten des Gargutes (Schließung der Poren-Bräunungsprozeß) Wasser in der Fondschale auf ca. 80°C (durch Heißluft im Garraum) erhitzt wird und durch die Schaltung der Heizspirale ein mit Luftfeuchte gesättigter Raum (bzw. Kammer) entsteht. Ein Austrocknen des Gargutes wird somit verhindert. Dabei handelt es sich um eine besonders schonende Zubereitung, d.h. um eine Verbesserung der Qualität des Gargutes.

An der Innendecke des Kühl- und Garraumes befinden sich Grillstäbe, die separat geschaltet werden können. Auch hier ist wieder ein separates Grillen im gesamten Raum oder in abgeteilten Kammern möglich.

Die Aufteilung des Garraumes durch die Isolierschichten in verschiedene Kammern gestattet, daß im unteren Teilbereich die Garungsart Kochen, im mittleren Teilbereich Backen bzw. Braten in heißer Luft und im oberen Teilbereich das Grillen stattfindet.

Die für das Garen und/oder Backen erforderliche Heißluft wird in einem Heizraum bereitgestellt (abgesehen von den zusätzlichen Heizspiralen auf dem Bodenblech des Kühl-Garraumes). Der Heizraum ist isoliert und für Temperaturen bis + 300°C bemessen. Durch das Zusammenwirken einer Heizspirale mit einem Lüfterrad wird die erforderliche Wärme bereitgestellt, entsprechend genutzt und die Restwärme in den Heizraum zurückgeführt. Der Heizraum ist mit wärmespeichernden Platten ausgekleidet, die durch eine bestimmte Ausführung (Nocken) eine große Oberfläche besitzen. (Metallnocken, Kupfer-Eisenlegierung)

Im Kühlgeräteraum befinden sich Verdampfer, Abstellgitter, Lüfter für Kälteaustrag (kalte Luft). Somit wird bei Bedarf Kälte erzeugt und über einen Kälteausgang nach Umschalten allererforderlichen Ventile über die gleichen Schachtöffnungen transportiert, wie vorher die Wärme. Nach Nutzung des Kältestromes gelangt die Restkälte wieder in den Kühlgeräteraum.

Die Vorteile im Bereich der Kühlung sind eine getrennte Kühllagerung von Fisch und Fleisch sowie kalten und abzukühlenden Lebensmitteln. Durch die einzelnen Kammern ist es nicht nötig, nach dem Abschalten von Garen/Backen alle Kammern auf Kühlung umzuschalten.

Weitere getrennte Räume der Einrichtung beinhalten:
- Motor und Verdichter für Kälteanlage
- Ablagemöglichkeit für die Isolierschichten, soweit sie im Kühl-Garraum nicht benötigt werden.

Durch die Kombination von wechselnder Kühlung und Wärme sind neue Verfahren in der Lebensmittelbranche durch Kombinationsschaltungen in den Prozessen Garen und Kühlen möglich. Neben dem Garungsprozeß können damit auch wesentliche Vor- und Nachbereitungen durchgeführt werden.

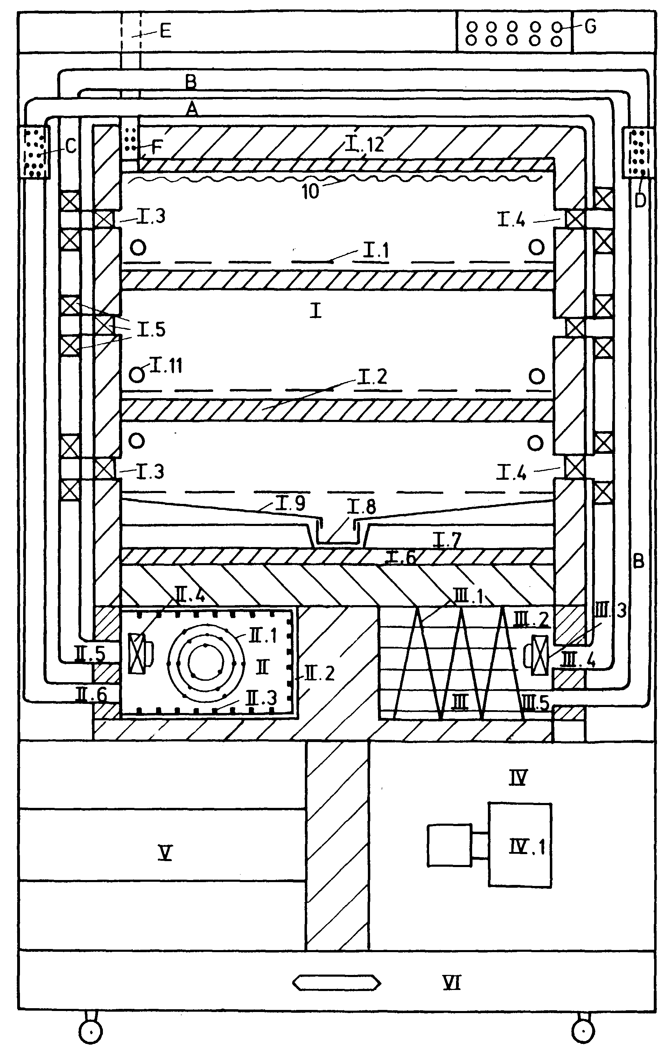

An einem Ausführungsbeispiel soll nochmals eine Erläuterung erfolgen.
Die Abbildung zeigt eine schematische Darstellung der erfindungsgemäßen Einrichtung.

Im Kühl-Garraum I sind Gitter I.1. zur Speisenablage angeordnet. Die Aufteilung des Kühl-Garraumes I in mehrere horizontal übereinander liegende Kammern erfolgt bei Erfordernis durch die Nutzung von Einschüben I.2. im Sinne von Isolierschichten. Jeder Kammer sind für den Ein- und Austritt des Wärme- oder Kältestromes Eintrittskanäle I.3. und Austrittskanäle I.4. zugeordnet. Die Ein- und Austrittskanäle in den einzelnen Etagen können durch Ventile I. 5. unabhängig voneinander geschaltet werden. Damit können in den Kammern unterschiedliche Prozesse der Speisenbehandlung bzw. -lagerung erfolgen, und es können erhebliche Energiemengen gespart werden. Hervorzuheben ist noch, daß der Kälte- bzw. Wärmestrom im Bereich des Ein- und Austretens der Kanäle I.3., I.4. die Kanäle gleichermaßen nutzen. Nachdem die Teilströme der Wärme oder der Kälte wieder zusammengeführt sind, also wieder einen einheitlichen Kanal bilden (Kanalleitung A für Wärmestrom, Kanalleitung B für Kältestrom), passieren sie jeweils eine Filteranlage, d.h. Filteranlage C ist für den Wärmestrom, Filteranlage D für den Kältestrom vorgesehen.

Weiterhin besitzt der Kühl-Garraum I ein Sicherheitsventil E (Überdruckventil) mit Filteranlage F.

Der Kühl-Garraum ist am Boden mit voneinander getrennt betriebsbereiten Heizspiralen I. 6. versehen, so daß z.B. beim Kochen von Kartoffeln in der unteren abgeschotteten Kammer die Umgebungswärme mit genutzt wird.

In einem anderen Fall der Speisezubereitung kann z.B. nach dem Anbraten des Gargutes Wasser in der Wasserschale I.7. und/oder in der Fondschale I.8. durch Schaltung der Heizspiralen I.6. verdampft werden, so daß ein mit Luftfeuchte gesättigter Garraum (bzw. Kammer) entsteht.

Die mit 1.9. bezeichneten Leitbleche ermöglichen wiederum in einem anderen Fall der Speisezubereitung, daß beim Braten abtropfendes Fett über die Leitbleche 1.9. der Fondschale I.8. zugeführt werden kann und außerdem mit Hilfe von Wasser aus der Wasserschale I. 8. eine hohe Luftfeuchtigkeit gegeben ist.

Soll beispielsweise in der unteren Kammer mit Nutzung der Wasserschale I.7 und der Fondschale I.8 ein Schweinebraten hergestellt werden, könnte folgendermaßen verfahren werden:

Die Einrichtung wird so eingestellt, daß zuerst ein Kühiprozeß beginnt und nachts 2 Uhr der Garprozeß (Nutzung von Nachtstrom). Vor Beginn des Garungsprozesses schaltet sich automatisch die Kühlung ab und es beginnt die Wärmezufuhr, die bei Schweinebraten mit 160°C vorgegeben wird. Ein elektronischer Kerntemperaturmesser im Fleisch gibt bei 70-80°C Kerntemperatur die Beendigung des Garprozesses an. Die Zuführung von Heißluft wird abgeschaltet. Es folgt das Ablassen des heißen Wassers aus der Wasserschale I.7 und ein dreimaliges Spülen mit kaltem Wasser, das Absinken der Temperatur auf 40-50°C in ca. 20 min und das Einschalten der Kühlung, so daß nach ca. 1 Stunde bereits eine Temperatur unter 10°C und spätestens in 3 Stunden die gewünschte Kerntemperatur des Fleisches erreicht wird.

Nach Entnahme des Gargutes und Soßenfonds kommt nach Entsorgung von evtl. verwendeter Folie (zum Abdecken von Leitblechen I.9.) etwas Reinigungsmittel in die Fondschale I.8 und Wasserschale I.7 und das Gerät wird auf Selbstreinigung geschaltet mit anschließender Klarspülung und Ableitung aus der Wasserschale. -

Ein Grillen kann unter Nutzung der an der Decke des Kühl-Garraumes befindlichen und separat beheizbaren Grillstäbe erfolgen, wobei durch Verwendung eines Einschubes I.2. für die obere Kammer eine gesonderte Grillbehandlung möglich ist.

Eine Showbeleuchtung I.11. ist zweckmäßigerweise jeder Kammer zugeordnet. Die Isolierung des Kühl-Garraumes ist mit I.12. dargestellt.

Im Heizraum II befinden sich die Heizspirale II.1., wärmespeichernde Platten II.2. mit Nocken II.3. zur Gewährleistung einer großen Oberfläche und der Motor mit Lüfterrad II.4.
Über den Wärmeausgang II.5. tritt die Wärme in den Gar-/Backprozeß und gelangt als Restwärme über die Wärmerückflußöffnung II.6. zurück in den Heizraum II.
Im Kühlgeräteraum III mit Verdampfer III.1., Abstellgitter III.2., Motor mit Lüfterrad III. 3. gelangt bei Bedarf der Kältestrom über den Kälteausgang II.4. in den Kühl-Garraum oder bei entsprechender Schaltung durch die Ventile I.5. nur in bestimmte Kammern und danach als Restkältestrom über die Kälterückflußöffnung II.5. zurück in den Kühlgeräteraum III.

Im Motorraum IV befinden sich der Motor mit Verdichter IV.1.

Zweckmäßig sind weiterhin die Anordnung des Raumes V für Geräte und Raum VI, in welchem die Einschübe I.2. gelagert werden können.

Mit einer nicht in der Abbildung dargestellten aber schon erwähnten Kerntemperaturmessung, der Steuerung aller mechanischen Vorgänge durch elektronisch gesteuerte Motoren und einem Softwareprogramm, als Bestandteil der Digitalanzeige - siehe hierzu Anzeigefeld G - wird die Einrichtung ergänzt.

## Patentansprüche

1. Verfahren zur automatischen Behandlung von Kühlgut, Gargut und Backwaren, gekennzeichnet dadurch, daß die Lebensmittel, je nach erforderlicher Behandlung, einem Kalt- oder Warmluftstrom gezielt ausgesetzt werden, indem der Kälte-/Wärmestrom in einen Kühl-Garraum (I) tritt, das Kühlgut oder das Gargut und/ oder die Backwaren direkt umströmt und als Restkälte/ -wärmestrom den Kühl-Garraum (I) verläßt, gefiltert wird und zu einem Kältegeräteraum (III)/ Heizraum (II) zurückkehrt.

2. Verfahren nach Anspruch 1, gekennzeichnet dadurch, daß das Gargut für die Speiseaufbereitung fertig gewürzt der weiteren Behandlung zugeführt wird, indem ein vorprogrammierter Kühlprozeß mit zeitbedingter Umschaltung auf Erwärmen und Garen einsetzt oder verfahrensabhängig gleich der Garprozeß durchgeführt wird, nach Erreichen einer vorgegebenen Kerntemperatur im Gargut das Heizen beendet wird, ein Spülen einer Wasserschale (I.7) mit Kühlwasser erfolgt, dementsprechend relativ schnell beim Abkühlen des Gargutes eine Temperatur von 30-40°C erreicht wird und in diesem Temperaturbereich die Kühlung zur hygienischen Aufbewahrung des Gargutes eingeschaltet wird.

3. Verfahren nach Anspruch 1, gekennzeichnet dadurch, daß Kälte-/Wärmestrom nach Verlassen des Kältegeräteraumes (III) bzw. des Heizraumes (II) in Teilströme aufgespalten werden, die in Behandlungskammern das Kühl- oder Gargut und/oder die Backwaren direkt umströmen und als Restkälte/-wärmeströme die Behandlungskammern verlassen, als Teilströme zusammengeführt, gefiltert und zurückgeleitet werden.

4. Verfahren nach Anspruch 1 und 3, gekennzeichnet dadurch, daß die Teilströme in den Kammern unabhängig voneinander in ihren Geschwindigkeiten variiert werden.

5. Verfahren nach Anspruch 3 und 4, gekennzeichnet dadurch, daß bei einer Behandlung in der unteren Kammer, speziell beim Kochen, die Umgebungshitze den Behandlungsprozeß maßgeblich beeinflußt.

6. Verfahren nach Anspruch 1 und 3 gekennzeichnet dadurch, daß eine Wärmespeicherung im Heizraum (II) erfolgt.

7. Einrichtung zur automatischen Behandlung von Kühlgut, Gargut und Backwaren, gekennzeichnet dadurch, daß in einem Kühl-Garraum (I) mit Gittern (I.1.) übereinander Eintrittskanäle (I.3.) und Austrittskanäle (I.4.) für Kälte/Wärmeströme angeordnet sind und der Kühl- und Garraum (I) durch isolierend wirkende Einschübe (I.3.) in Kammern für die voneinander getrennte Speisenbehandlung oder -aufbewahrung aufgeteilt werden kann.

8. Einrichtung nach Anspruch 7, gekennzeichnet dadurch, daß im Bereich der Eintritts- und Austrittskanäle (I.3., I.4.) Ventile (I.5.) derart angeordnet sind, daß durch deren Schaltung und Zuordnung zu den Kanälen die Eintrittskanäle (I.3.) für Wärme die Austrittskanäle für Kälte bilden und umgekehrt, d.h. die Eintrittskanäle (I.4.) für Kälte die Austrittskanäle für Wärme darstellen.

9. Einrichtung nach Anspruch 7, gekennzeichnet dadurch, daß auf dem Boden des Kühl-Garraumes (I) unabhängig voneinander funktionierend Heizspiralen (I.6.) angeordnet sind.

10. Einrichtung nach Anspruch 7, gekennzeichnet dadurch, daß auf dem Boden des Kühl-Garraumes (I) eine Wasserschale (I.7.) mit Fondschale (I.8.) und Leitbleche (I.9.) angeordnet sind.

11. Einrichtung nach Anspruch 7, gekennzeichnet dadurch, daß der Kühl-Garraum (I) mit einem Sicherheitsventil (E) als Überdruckventil versehen ist.

12. Einrichtung nach Anspruch 7, gekennzeichnet dadurch, daß im Bereich der Kammern des Kühl-Garraumes (I) jeweils eine Showbeleuchtung (I.11.) vorhanden ist.

13. Einrichtung nach Anspruch 7, gekennzeichnet dadurch, daß die Kanalleitung für den Wärme- und Kältestrom jeweils nach dem Kühl-Garraum (I) eine Filteranlage für den Wärmestrom (C) bzw. eine Filteranlage für den Kältestrom (D) passiert.

14. Einrichtung nach Anspruch 7, gekennzeichnet dadurch, daß in einem Heizraum (II) wärmespeichernde Platten (II.2.) mit Nocken (II.3.) vorgesehen sind.

15. Einrichtung nach Anspruch 7, gekennzeichnet dadurch, daß nahe der Decke des Kühl-Garraumes (I) Grillstäbe (I.10.) angeordnet sind, die unabhängig vom Wärmestrom, der dem Grillgut über die Ein- und Austrittskanäle (I.3., I.4.) zugeführt werden kann, beheizbar sind.

16. Einrichtung nach Anspruch 7, gekennzeichnet dadurch, daß ein über die Breite der Einrichtung angeordneter Raum (VI) für die Ablage von Einschüben (I.2.) ausgestaltet ist.

17. Einrichtung nach Anspruch 7, gekennzeichnet dadurch, daß Heizraum (II), ein Kühlgeräteraum (III), ein Motorraum (IV), ein Raum für Geräte (V) und ein Raum für die Ablage von Einschüben (VI) zweckmäßigerweise baukastenartig unter dem Kühl-Garraum (I) angeordnet sind.

## Claims

1. Method for automatic handling of foodstuffs to be cooled / cooked, and bread, cakes & pastries, characterised in that the foodstuffs - depending on the required treatment - are specifically subjected to a cold or hot air current, i.e., the cold / hot air current enters the combined cooling-cooking space (I) where it is circulated around the foodstuffs to be cooled / cooked, and / or bread, cakes & pastries, and then - in form of residual cold / heat - leaves the combined cooling-cooking space(I), gets filtered and finally returns back to a refrigerating equipment (III) / heating equipment (II) room.

2. Method according to claim no. 1, characterised in that the foodstuffs to be cooked are already seasoned when being subjected to their further treatment, i.e., a pre-programmed cooling process with time-controlled switching-over into heating / cooking mode gets started or - depending on the procedure actually selected - cooking mode is entered into right from the beginning, and - after reaching a pre-set core temperature inside the foodstuffs - heating is stopped, followed by flushing a water bowl (I.7) with cooling water, which brings the foodstuffs' temperature relatively quickly down to 30 °C or 40 °C where cooling mode is switched on to provide hygienic conditions to the foodstuffs when subsequently being stored.

3. Method according to claim no. 1, characterised in that after leaving the refrigerating equipment (III) / heating equipment (II) room the cold / hot air currents are divided into sub-streams which are circulating around the foodstuffs to be cooled / cooked, and / or bread, cakes & pastries placed inside the treatment chambers, then are leaving the latter in form of residual cold / heat currents and - after being re-combined and filtered - finally are being returned.

4. Method according to claims nos. 1 & 3, characterised in that the sub-streams' velocities inside the chambers are varied independently from each other.

5. Method according to claims nos. 3 & 4, characterised in that during treatment inside the bottom chamber - especially in cooking mode - the ambient heat will have a decisive impact on the treatment process itself.

6. Method according to claims nos. 1 & 3, characterised in that a heat is accumulated inside the heating equipment room (II).

7. Device for automatic handling of foodstuffs to be cooled / cooked, and bread, cakes & pastries, characterised in that inside a combined cooling-cooking space (I), in which grates (I.1) are placed, cold / hot air current inlet channels (I.3) and outlet channels (I.4) are located one on top of the other, and the combined cooling-cooking space (I) can be divided into separate chambers by using slide-ins (I.3) acting as heat insulators, the latter making it possible to treat - or store - foodstuffs individually in the chambers so formed.

8. Device according to claim no. 7, characterised in that around the inlet and outlet channels (I.3, I.4) valves (I.5) are fitted in such a way that - by switching / specifically assigning them to the individual channels - the hot air current inlet channels (I.3) may act as cold air current outlet channels, and vice versa, i.e., the cold air current inlet channels (I.4) - in turn - take the function of hot air current outlet channels.

9. Device according to claim no. 7, characterised in that the floor area of the combined cooling-cooking space (I) is equipped with heating spirals (I.6) that are operating independently from each other.

10. Device according to claim no. 7, characterised in that a water bowl (I.7), with fond tray (I.8) and guiding plates (I.9), is provided on the floor of the combined cooling-cooking space (I).

11. Device according to claim no. 7, characterised in that the combined cooling-cooking space (I) is equipped with a safety valve (E), acting as a PCV.

12. Device according to claim no. 7, characterised in that a show light (I.11) is provided to each of the single chambers formed inside the combined cooling-cooking space (I).

13. Device according to claim no. 7, characterised in that - downstream to the combined cooling-cooking space (I) - the cold / hot air channel ducts are passing through a filter installation for the cold air current (D) and for the hot air current (C), respectively.

14. Device according to claim no. 7, characterised in that heat-accumulation plates (II.2) equipped with cams (II.3) are provided inside a heating equipment room (II).

15. Device according to claim no. 7, characterised in that grilling rods (I.10), which may be heated independently from the hot air current that can be supplied through the inlet and outlet channels (I.3, I.4) to the foodstuffs to be grilled, are located right underneath the ceiling of the combined cooling-cooking space (I).

16. Device according to claim no. 7, characterised in that there is a space (VI), stretching over the whole width of the device, designed to accommodate the slide-ins (I.2) not in use.

17. Device according to claim no. 7, characterised in that the heating equipment room (II), the refrigerating equipment room (III), the motor room (IV), the tool & gear room (V) as well as the space for accommodating the unused slide-ins (VI) are designed after a modular concept, which allows fitting them underneath the combined cooling-cooking space (I).

## Revendications

1. Procédé destiné au traitement automatique de marchandises à réfrigérer, de marchandises à cuire et de produits de boulangerie, **caractérisé par le fait que,** en fonction du traitement nécessaire, un courant d'air froid ou un courant d'air chaud est dirigé sur les denrées alimentaires en entrant dans une salle de réfrigération et de cuisson (I), en enveloppant directement les marchandises à réfrigérer ou les marchandises à cuire et/ou les produits de boulangerie et en quittant la salle de réfrigération et de cuisson (I) en tant que courant chauffant/réfrigérant résiduel, en étant filtré et en retournant vers une salle des appareils frigorifiques (III)/chaufferie (II).

2. Procédé selon la revendication 1, **caractérisé par le fait que** les marchandises à cuire destinées à la préparation des aliments sont amenées au traitement suivant après avoir été assaisonnées par le fait qu'un processus de réfrigération préprogrammé accompagné d'un passage au réchauffement et à la cuisson lié au temps se met en route ou que, en fonction du procédé, le processus de cuisson est exécuté aussitôt, que le chauffage est terminé après l'obtention d'une température prédonnée située au coeur des marchandises à cuire, qu'il s'ensuit un lavage d'une rigole (I.7.) avec de l'eau de refroidissement, qu'en fonction de cela une température de 30-40°C est atteinte relativement rapidement lors du refroidissement des marchandises à cuire et que la réfrigération destinée à conserver de façon hygiénique les marchandises à cuire est mise en route dans cette plage de température.

3. Procédé selon la revendication 1, **caractérisé par le fait que,** après voir quitté la salle des appareils frigorifiques (III) et la chaufferie (II) respectivement, le courant chauffant/réfrigérant est divisé en courants partiels enveloppant directement les marchandises à réfrigérer ou les marchandises à cuire et/ou les produits de boulangerie dans des chambres de traitement et quittant les chambres de traitement en tant que courants chauffants/réfrigérants résiduels, étant réunis, filtrés et reconduits en tant que courants partiels.

4. Procédé selon la revendication 1 et 3, **caractérisé par le fait que** les vitesses des courants partiels sont modifiées dans les chambres indépendamment les uns des autres.

5. Procédé selon la revendication 3 et 4, **caractérisé par le fait que** la chaleur ambiante influence le processus de traitement de façon déterminante lors d'un traitement dans la chambre inférieure, en particulier lors de la cuisson.

6. Procédé selon la revendication 1 et 3, **caractérisée par le fait qu'**une accumulation de la chaleur s'effectue dans la chaufferie (II).

7. Installation destinée au traitement automatique de marchandises à réfrigérer, de marchandises à cuire et de produits de boulangerie, caractérisée par le fait que des canaux d'entrée (I.3.) et des canaux de sortie (I.4.) pour les courants chauffants/réfrigérants sont disposés les uns au-dessus des autres dans une salle de réfrigération et de cuisson (I) munie de grilles (I.1.) et que la salle de réfrigération et de cuisson (I) peut être divisée, par des dispositifs embrochables (I.3.) ayant une action isolante, en chambres destinées au traitement et à la conservation des aliments séparés l'un de l'autre.

8. Installation selon la revendication 7, **caractérisée par le fait que** des soupapes (I.5.) sont disposées dans le domaine des canaux d'entrée et des canaux de sortie (I.3., I.4.) de telle façon que, grâce à leur application et leur affectation par rapport aux canaux, les canaux d'entrée (I.3.) pour le chaud forment les canaux de sortie pour le froid et inversement, c. à. d. que les canaux d'entrée (I.4.) pour le froid représentent les canaux de sortie pour le chaud.

9. Installation selon la revendication 7, **caractérisée par le fait que** des boucles chauffantes (I.6.) sont disposées sur le sol de la salle de réfrigération et de cuisson (I) en fonctionnant indépendamment les unes des autres.

10. Installation selon la revendication 7, **caractérisée par le fait qu'**un caniveau (I.7.) muni d'une rigole (I.8.) et de tôles déflectrices (I.9.) est disposé sur le sol de la salle de réfrigération et de cuisson (I).

11. Installation selon la revendication 7, **caractérisée par le fait que** la salle de réfrigération et de cuisson (I) est pourvue d'une soupape de sûreté (E) considérée comme soupape de surpression.

12. Installation selon la revendication 7, **caractérisée par le fait qu'**un éclairage apparent (I.11.) est chaque fois présent dans le domaine des chambres de la salle de réfrigération et de cuisson (I).

13. Installation selon la revendication 7, **caractérisée par le fait que** la conduite du canal pour le courant chauffant et le courant réfrigérant traverse à chaque fois, après la salle de réfrigération et de cuisson (I), une installation de filtrage pour le courant chauffant (C) et une installation de filtrage pour le courant réfrigérant (D).

14. Installation selon la revendication 7, **caractérisée par le fait que** des plaques accumulatrices de chaleur (II.2.) munies de cames (II.3.) sont prévues dans une chaufferie (II).

15. Installation selon la revendication 7, **caractérisée par le fait que** des résistances pour gril (I.10.) sont disposées près du plafond de la salle de réfrigération et de cuisson (I), résistances étant susceptibles d'être chauffées indépendamment du courant chauffant qui peut être amené aux marchandises à griller par l'intermédiaire des canaux d'entrée et des canaux de sortie (I.3., I.4.).

16. Installation selon la revendication 7, **caractérisée par le fait qu'**une salle (VI) disposée sur toute la largeur de l'installation est configurée en vue du dépôt de dispositifs embrochables (I.2.).

17. Installation selon la revendication 7, **caractérisée par le fait que** la chaufferie (II), la salle des appareils frigorifiques (III), la salle des machines (IV), la salle des appareils (V) et la salle pour le dépôt de dispositifs embrochables (VI) sont disposées, de façon appropriée au but, à la façon de modules en dessous de la salle de réfrigération et de cuisson (I).
